Europäisches Patentamt

European Patent Office

Office européen des brevets

(11) Publication number: **0 060 535**
A2

(12) **EUROPEAN PATENT APPLICATION**

(21) Application number: **82102018.7**

(22) Date of filing: **12.03.82**

(51) Int. Cl.³: **G 06 F 15/16**

(30) Priority: **12.03.81 US 243013**

(71) Applicant: **RECOGNITION EQUIPMENT INCORPORATED, Post Office Box 222307, Dallas Texas 75222 (US)**

(43) Date of publication of application: **22.09.82 Bulletin 82/38**

(72) Inventor: **Fredricsson, Bo Gunnar, 12813 Camino del Valle, Poway California 92064 (US)**
Inventor: **Neilson, Dan Allan, 5424 Camanito Borde, San Diego Co. California 92108 (US)**

(74) Representative: **Wagner, Karl H., P.O. Box 246 Gewürzmühlstrasse 5, D-8000 Munich 22 (DE)**

(84) Designated Contracting States: **DE FR GB IT**

(54) **Multiprocessor network.**

(57) An expandable multiprocessor system is disclosed wherein each processor is identical and each processor can communicate with other processors on its bus or, through an interconnect board, processors on another bus. Additional buses may be added to the system as desired to add user terminals, disc units, tape units, or other peripherals each of which is connected to an identical microprocessor.

EP 0 060 535 A2

0060535

MULTIPROCESSOR NETWORK

FIELD OF INVENTION

This invention relates to a multiprocessor network and more particularly to a multiprocessor network in which all of the processors are identical.

BACKGROUND OF THE INVENTION

Various designs in multiprocessor systems are known. In many of these systems a controller or one designated processor controls the entire network giving priority of one processor over the others. Systems such as these are not readily expandable beyond a certain point because the central controller processor can only handle so many processors before the traffic on the common bus connecting the processors increase to an extent that neither the bus nor the controlling processor can handle the traffic. In an attempt to alleviate this situation, sequentially polled systems have been set up wherein each processor is given a specific time slot; however, delays may be caused by a processor waiting for its time slot in which to use the bus.

Further attempts have been made to alleviate the situation using hierarchical network of computers with portions of the work accomplished by subordinate processor nodes. However, the host or controlling computer is the limiting factor in the number of terminals which may be used in such a network.

## SUMMARY OF THE INVENTION

The multiprocessor system defined herein consists of a variable number of processors interconnected with a backplane or bus which may, in turn, be connected to other buses. A bus terminator is used to electrically terminate each bus since the number of processors is not fixed.

Each processor on a bus is identical to the other processors. The backplane may have connected thereto a number of processors plus one or more extended memory card, a bus terminating card, and one or more bus connector card. The extended memory card is utilized for additional memory within the bus and is usable by any of the processors. The bus connector interconnects the bus with another bus in crder to allow additional processors within the system. Each processor contains a microprocessor, a read only memory, random access memory, a universal asynchronous receiver/transmitter (UART), a parallel channel and a bus interface. Generally, each processor board uses only two communication channels: the bus system and either the serial or parallel channels. In addition to the bus, each processor normally communicates with only one peripheral device. However, it is possible to permit both the serial and parallel channels to be used on the same processor if desired.

The system is built around a backplane or bus. Each backplane is designed for a fixed maximum number of processors; however, if the system is to be expanded, another backplane is connected to the first backplane through a bus connector. Each system may be expanded indefinitely by interconnecting the different buses one with the other. A bus terminator card is used to terminate each bus and to apply a limited degree of control over the bus. Each processor is given an opportunity to use the bus. The operation is sequential, however, if one processor does not take the opportunity to use the bus, the next one in line gets to use that time slot. Therefore, time slots are not assigned to each processor, but each processor is given an opportunity sequentially in time to use the bus. When a processor has the opportunity to use the bus, it is permitted to transmit one byte of data each time. The speed of the bus in respect to each processor is usually large so the bus normally creates no extra time delay between transferring one byte of data and the next.

Each processor may be used with a different peripheral. Since each processor is identical to the other, it is immaterial which peripheral is attached to that processor. For example, the processor may be connected to a CRT and keyboard, with or without a printer; the processor may be connected to a tape drive or to a disk drive. When the terminal consists of a keyboard, a CRT, and an optional printer, all of these are connected to the processor through the UART as a single serial line. If the printer is not used, the terminal becomes a traditional data entry and inquiry station.

Each processor may address the RAM Memory of any other processor board on its own bus and other buses connected to it own bus through a bus connector. Even though each processor may read the memory of another processor board it may not write into that memory. Attempts to write into another processors memory are transformed into interrupts.

Each processor specifies the address of another processor whose memory it wishes to reference through a unit-subunit (US) register. This register is eight bits long; each four-bit nibble may contain the address of any processor on a bus. If the other processor addressed is on the same bus, only the first four bits (unit) are used and the second four bits (subunit) is set to zero. If the other processor is on an adjacent bus, the unit is set to the address of the bus interconnect card on the current bus and the subunit is set to the address of the processor on the other bus. It is the function of the bus interconnector to shift the contents of the US register four bits so that the subunit becomes a unit when the address is passed to the other bus. It is also the function of the bus interconnector to derive the correct return address (the address of the initiating processor as viewed from the target processor) and provide it to the other processor.

Since all of the processor cards are identical and interchangeable, the contents of the ROM on each card must be identical. The ROM overlays the lowest 2K of RAM memory for each processor. It contains the system initialization routines, interrupt service routines, and a portion of other routines used within the system. A bit in a configuration register selects whether the lowest 2K of memory is RAM or ROM. It always selects ROM after a powerup condition.

When the ROM is selected, a read using the backplane still references the RAM memory. A write to the lower 2K of memory always references the RAM memory.

THE DRAWINGS

Figure 1 is a pictorial illustration of three different interconnected buses with various peripheral equipment connected to each processor card.

Figure 2 diagrammatically illustrates two buses interconnected with various peripherals connected to each processor.

Figure 3 is a block diagram of a processor.

Figure 4 illustrates the communications between two processors.

Figure 5 is a timing diagram of the communications between two processors.

Figure 6 is a block diagram of the Bus Termination Board.

Figure 7 is a schematic representation of a connector circuit.

Figure 8 is an example of four interconnected backplanes.

Figure 9 is an example of a data transfer between two backplanes.

Figure 10 is a block representation of the transfer of Figure 9.

Figure 11 illustrates the connection of two connector circuits of Figure 7.

Table I is a example of data transfer between two processors.

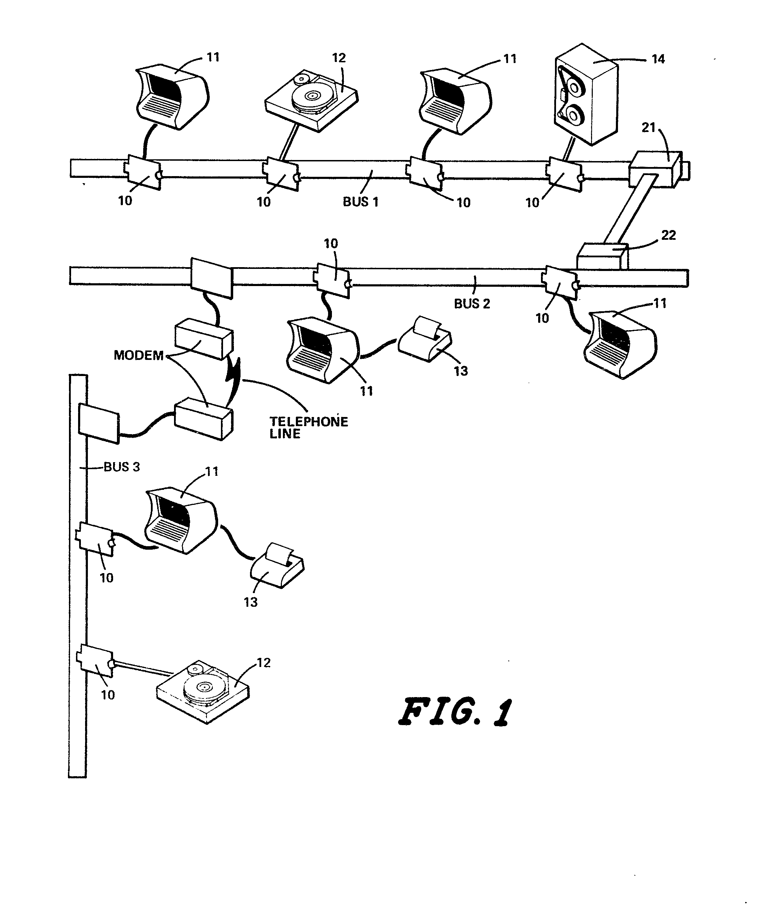

With reference to figure 1, the present invention is illustrated showing three buses, bus 1, 2 and 3, each having a plurality of processor cards thereon. For example, bus 1 has four processor cards, two connected to CRT terminals 11, one to a disk 12 and one to a tape drive 14. Bus 1 is interconnected with bus 2 through bus interconnect, 21 and 22. Bus 2 has two processors 10 connected to CRT 11s. One of the CRT also has a printer 13 connected thereto. Bus 2 is connected to bus 3 through modems. The bus interconnect is this instance is a radio or telephone link in that the two buses are physically separated by some distance. Bus 3 has a disk 12 connected to one processor and a CRT terminal 11 with a printer 13 connected to the other processor. The number of processors connected to each bus is arbitrary and physically limited only by the size of the backplane to which each processor card is interconnected. The backplane may have up to sixteen slots in which processors may be placed.

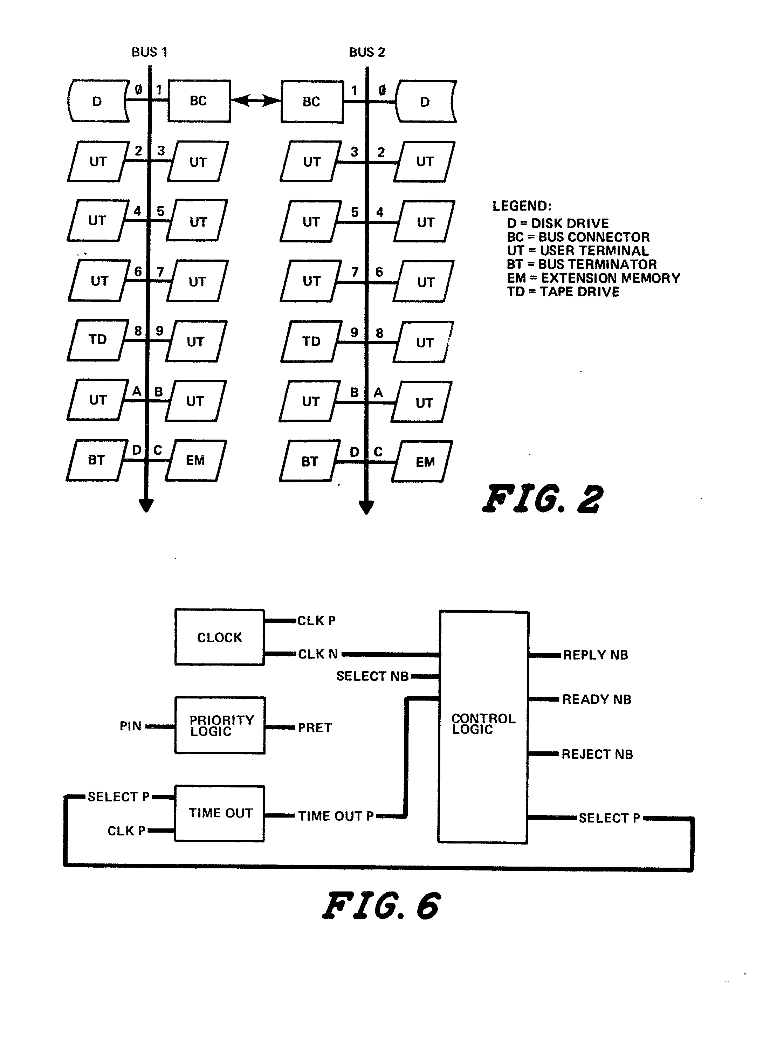

In figure 2, two buses are diagrammatically illustrated wherein each bus in this instance is identical; each having a single disc drive, a bus connector board, a tape drive, nine user terminals (CRT), an extended memory, and a bus terminator. Each of the user terminals, or CRTs may have printers connected to them if desired. The extended memory boards are additional memory circuits which may be used for storage and which may be addressed by each of the processors. The two buses may be separated up to 50 ft.

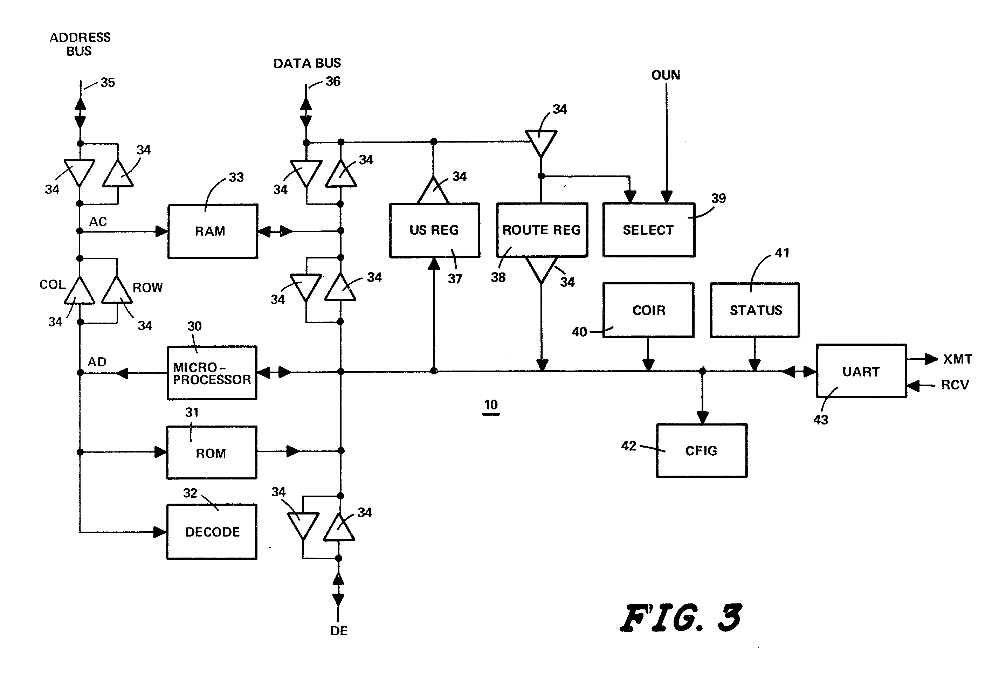

Figure 3 is an illustration of the processor used with each peripheral device. Each processor is identical and interchangeable with each other.

Each processor board has a microprocessor 30. This processor may be any of those which are presently available such as the Intel 8080, 8086, the Zilog Z80 or any other similar microprocessor. Each board has a ROM 31 which in the present embodiment is a 2K ROM and is used for the onboard instruction and enabling of the processor. A decode circuit 32 is used for decoding and reading the ROM. Each processor board also has a RAM 33, which may be, for example, 32K bytes of memory. Various buffers 34 are used throughout the system for addressing the RAM and reading the RAM; for supplying or receiving data on the data bus; or for sending addresses on the address buses. Address bus 35 goes to a backplane (not illustrated) to which all of the processors are connected, the data bus 36 also goes to the backplane. The line marked DE is that line which would go to a disk drive or tape drive system.

There are several registers on the processor board. The US register 37 is used to address another processor whose memory is to be read. The US register 37 is, for example, 8 bits long, each 4 bit nibble may contain the address of any processor on a bus. If the processor addressed is on the same bus, only the first four bits (unit) are used and the second four bits (subunit) are set to zero. If the other processor is on an adjacent bus the unit is set to the address of the bus interconnect card on the current bus and the subunit is set to the address of the processor on the adjacent bus. The bus connector shifts the contents of the US register four bits so the subunit becomes a unit when the address is passed to the other bus. It is also the function of the bus interconnect to derive the correct return address and provide it to the other processor.

The ROUTE register 38 is used to store data from another processor. A write to another processor's memory stores the data in the route register and not in the processor memory.

The SELECT comparator compares incoming UNIT address to hard wired slot-dependent OUN (own unit number).

The COIR 40 (cause of Interrupt register) is used to indicate why an interrupt has been set. This register has at least four bit positions. One bit (IPI) is for interprocessor interrupt. This bit is known as busy and is set whenever another processor successfully calls this processor. When this bit is set, no other calls may be received. In this instance the STATUS register 41 is used to indicate the status of the microprocessor. Bit 7 of the STATUS register indicates whether it is an attention interrupt or an acknowledgement. Unit and Subunit of the originator are in the source identification register (ROUTE register).

Another bit (RAF) is known as a reject interrupt and is set by the system when ever a call is made to a processor which has the BUSY set. It is also set whenever a call to or a read from a processor is attempted but which is not complete within a certain time period.

Still another bit (RTI) indicates when data is received from the UART.

The last bit (XNB) indicates that the off-board extension memory is free. The off-board memory extension is normally used as a disk or tape buffer. When the device in question is reading to or writing from the buffer, the extension memory should not be used, and this bit will be zero. When the device has finished, the bit will be set.

The UART 43 is used to communicate with the CRT terminal keyboard and/or printer.

The CFIG block 42, a configuration circuit, is a decoder. There are six valid encodings. Character 00 is reset busy, this allows another call and prevents an infinite interrupt loop. Character 01, reset reject, allows another call to be attempted, and prevents an infinite interrupt loop. Character 02, select extension memory, allows the backplane to be bypassed, and an off-board memory extension to be referenced in the upper half of the virtual address space. Character 03, select backplane, allows a normal interprocessor communication protocol to take place when the upper half of the virtual address space is used. Character 07, select ROM, allows access to ROM in the lower 2K of the virtual address space. Character 87, select RAM, allows access to Read-Write memory in the lower 2K of the virtual address space.

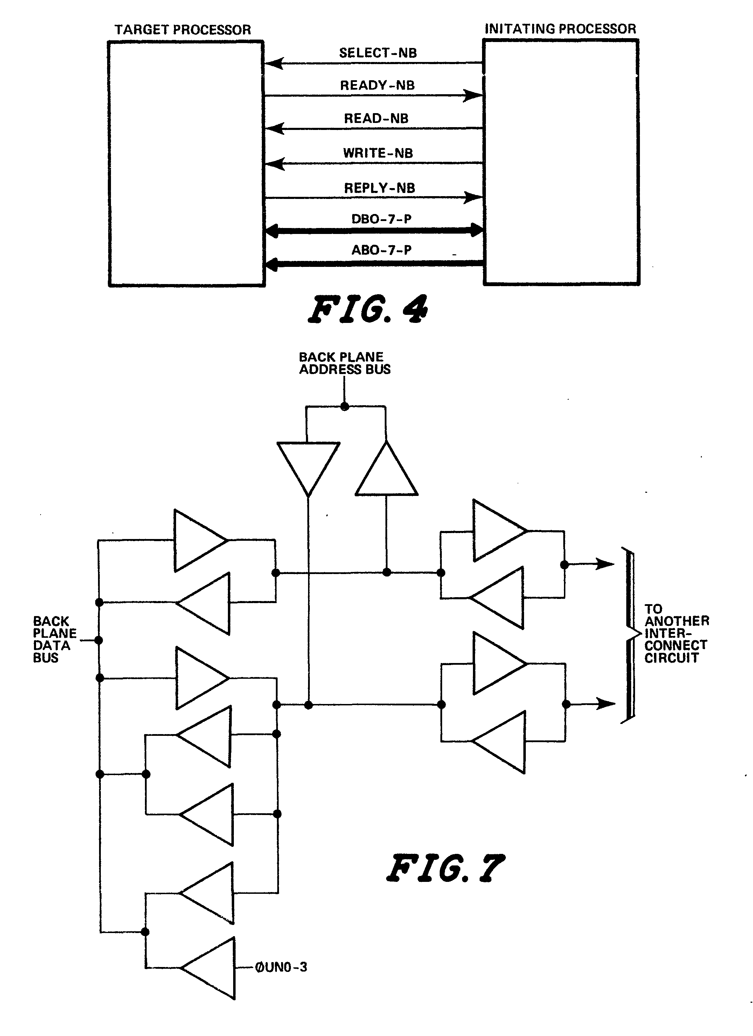

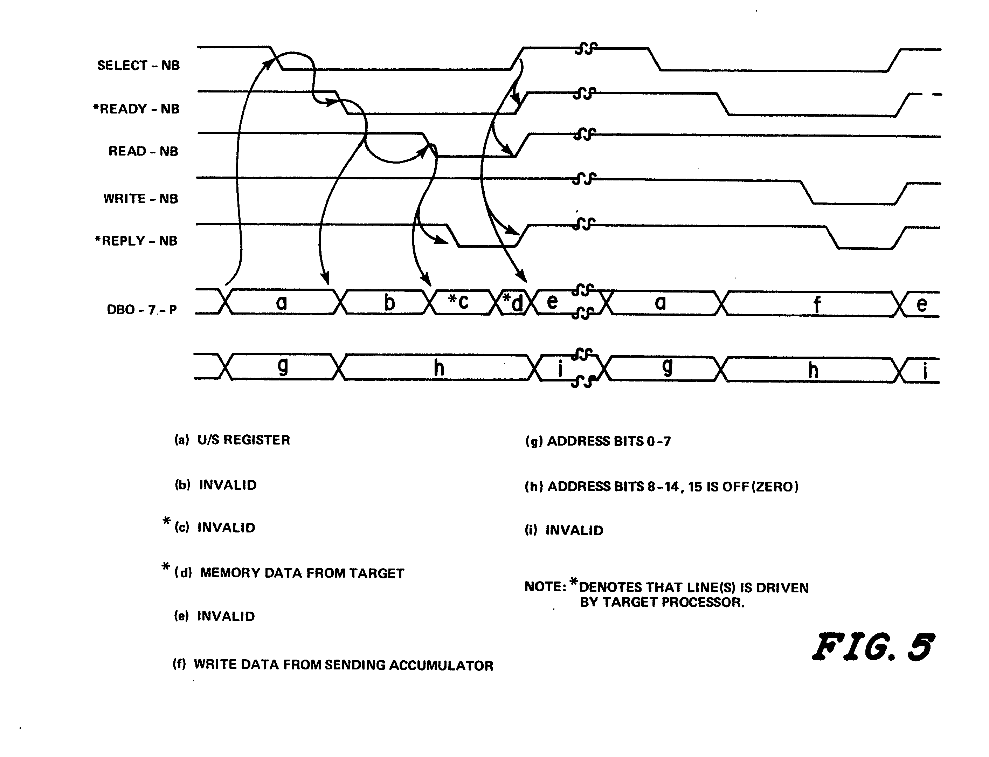

Communication between two processors is illustrated in figure 4. The timing diagram in figure 5 illustrates the communication between the processors. The target processor is selected and when it is not busy a ready signal is returned. The initiating processor reads a location in the memory of the target processor or writes into the route register of the target processor. This sequence is shown in figure five.

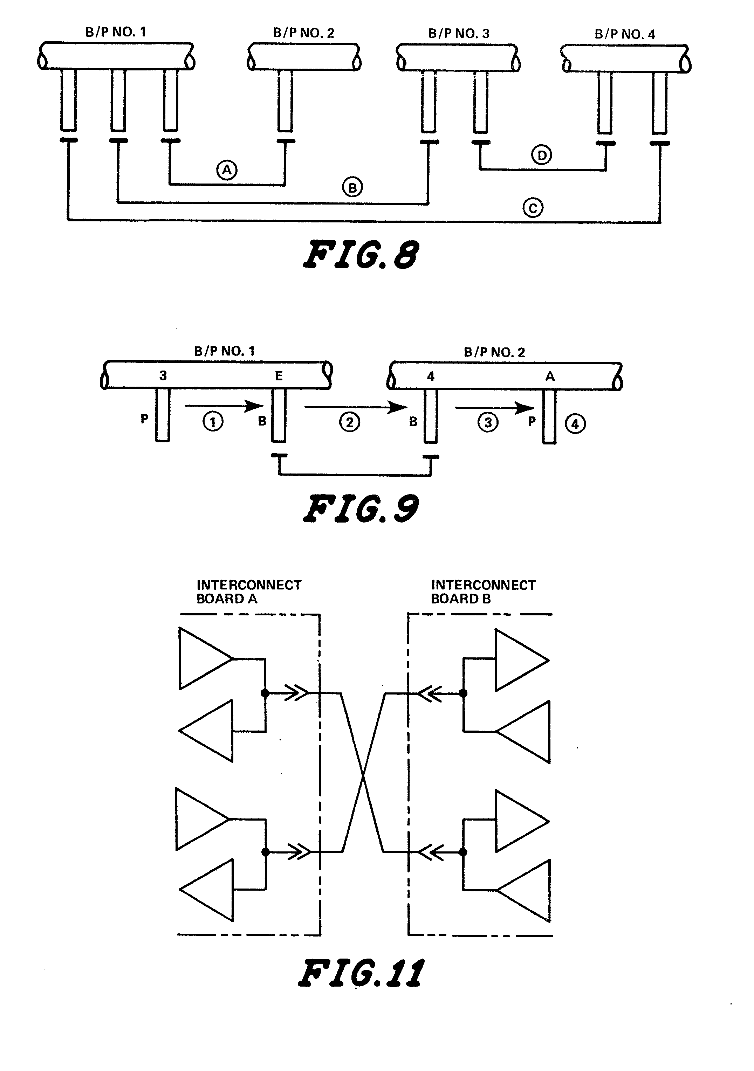

Referring to figure 6 there is illustrated a block representation of the system terminator board, the system clock is shown having both the negative output and positive output: clock N and clock P.

The priority logic or priority return logic's function is to make prioirity return (PRET) the opposite of priority in (PIN) on a known clock edge. The rest of the priority logic is distributed over the processors in the backplane. PRET out from the terminator is PIN to the first processor. PIN into the terminator board is POUT of the last processor. On each processor board, the priority logic functions as follows: If no use of the backplane is desired, POUT equals PIN with a single gate delay. If use of the backplane is desired and PIN is low, the processor is allowed to hold POUT low even if PIN subsequently goes high. With PIN high and POUT forced low, the processor has command of the backplane.

Time out or SELECT time out. The terminator board monitors the duration of each SELECT cycle. If the processor addresses an empty slot in the backplane, the backplane would be locked up forever with SELECT active. However the SELECT time out logic resolves this by issuing all signals that are expected plus the REJECT signal to indicate the abnormal termination of this cycle. The SELECT, READY, REPLY, and REJECT terminals are the same signal lines as those illustrated in figures 4 and 5.

The system bus interconnect Figures 7 and 11 provides for the direct communication between any two backplanes in the system. It occupies one slot in each of the backplanes. Figure 8 illustrates a

- 11 -

sample configuration and it should be noted that four backplanes are shown; backplanes 1, 2, 3 and 4. Backplane 1 requires three interconnect boards. One interconnects with board 2, one with board 3 and one with board 4. Backplane 2 requires only one interconnect board since it is only interconnected to backplane 1 through line A. Backplane 3 requires two interconnect boards as it is connected to backplane 1 through line B and backplane 4 through line D. Backplane 4 also requires two boards as it is connected to backplane 3 through line D and backplane 1 through line C.

Each of the interconnect boards is capable of two independent levels of communications. The simplest is the standard backplane interface. This is intrabackplane communications. The second is the interbackplane communication. This is the linking of two backplanes. Each interconnect board is capable of initiating or responding to a request. A bus interconnect board is in the initiating mode when a processor board in the same backplane initiates a transfer over the intrabackplane interface with the bus interconnect board as a primary target. A bus interconnect board is in the responding mode when the other bus interconnect board initiates a transfer over the interbackplane interface. It responds by initiating an intrabackplane transfer with the secondary target.

Figure 9 illustrates the transfer between two processors through their backplanes and through their interconnect boards. Table 1 lists a step-by-step procedure of the transfer. The processor in slot 3 of backplane 1 communicates with interconnect board B in slot E.

0060535

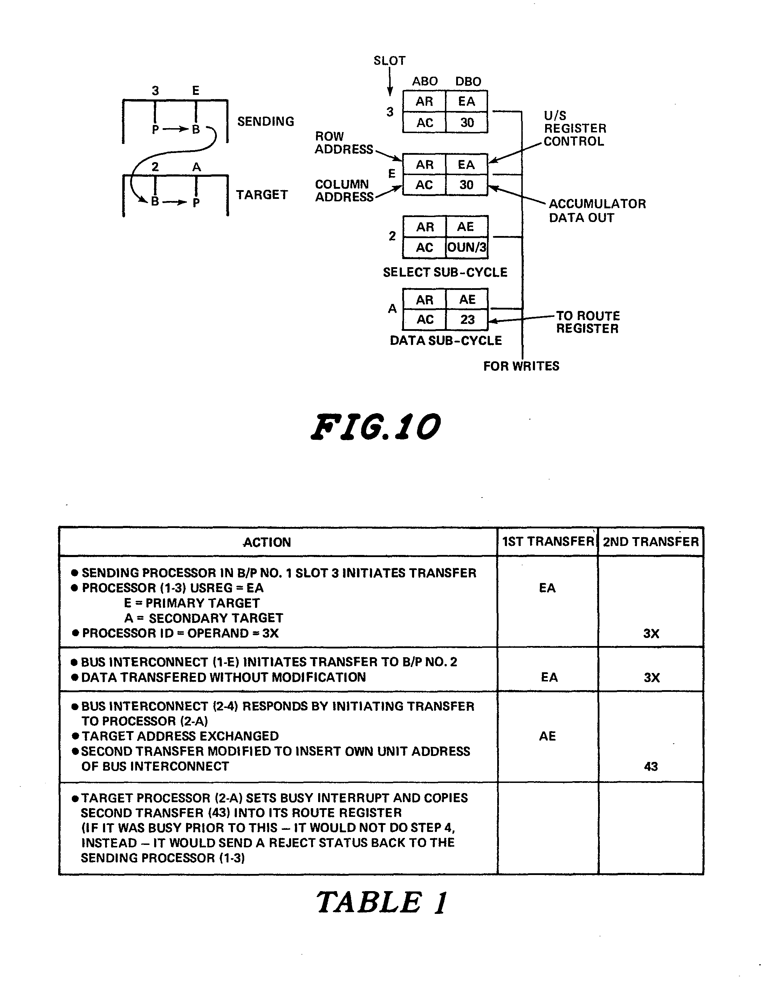

Interconnect board in slot E then communicates with interconnect board B in slot 4 of backplane 2, which in turn relays the communication to the processor A in backplane 2. The transfer example is also shown graphically in block form in figure 10 and Table from Table I.

A lock out condition occurs if both bus interconnect boards enter the initiating mode during the time of a single operation. Neither backplane is available as a target for the Bus Interconnect Boards. A jumper is provided on each bus interconnect board to select a priority between the two. A high priority is assigned to one and a low priority to the other. The low priority device issues all signals that are expected by the intrabackplane transfer on its bus including the reject signal. This is called a dummy intrabackplane transfer. When the processor on the low priority bus completes the dummy transfer, it allows POUT to go high. When the priority logic on the bus interconnect board is cycled such as to give it command of the backplane, it initiates an intrabackplane transfer with the secondary target.

Operation across the interbackplane interface is transparent to the user. That is except for the time lag, the set up, initiation and post execution responses are the same as for an intrabackplane transfer.

The US register is set up to identify the primary target in the most significant digit and the secondary target in the least significant digit. A memory read or memory write instruction is executed with this most significant bit of the effective address set to a 1.

For example, to read another processor memory location 1000 HEX, then the effective address must be 9000 HEX. To write, a dummy address is presented with the most significant bit set.

An extended memory cannot be referenced across the interbackplane interface.

Specific examples have been given for transfer between processors on the same backplane and between processor on different backplanes.

It is the intent to be limited only by the scope of the claim appended hereto.

What is Claimed:

1.  A multiprocessor network wherein a plurality of processors are interconnected with each other on a common backplane bus, characterized by a plurality of user terminals and peripheral equipment each connected to the common backplane by an identical processor and a terminator board for routing the control logic for the backplane.

2.  The network according to claim 1 charcterized in that each processor has equal priority with all other processors.

3.  The network according to claim 1 characterized in that each processor is assigned a specific position in the backplane and that position is the address of the processor.

4.  The network according to claim 1, further characterized by a connector circuit connected to said backplane and a connectro circuit on a second multiprocessor network to permit the flow of data between the two networks.

5.  The network according to claim 4 characterized by a register associated with each processor in which a two level address may be written, one level address for addressing other processors or the connector circuit on said backplane and the other level address for addressing a processor on said second multiprocessor network.

6. The network according to claim 1 characterized in that each processor has a memory circuit associated therewith and said memory may be read by any processor interconnected to the backplane.

7. An expandable multiprocessor system wherein a plurality of processors are connected together on a common bus, characterized by a backplane, a plurality of identical processors interconnected through said backplane, a terminator circuit connected to the backplane to provide a termination therefore and at least one interconnect circuit for expanding the system to add an additional plurality of identical processors.

8. The system according to claim 7 characterized in that the processors communicate with one another one byte at a time.

9. The system according to claim 7 characterized in that each processor may be connected to different peripheral devices and each device is accessible from any processor to which it is not directly connected.

10. An expandable multiprocessor system comprising a first backplane and a plurality of identical processors connected to said backplane, at least one connector circuit and at least one other backplane connected to said at least one other backplane by said at least one connector circuit whereby any processor on said first backplane can communicate with any processor on the second backplane on said at least one other backplane.

0060535

FIG. 1

BUS 1        BUS 2

| | | | | |
|---|---|---|---|---|
| D | Ø 1 | BC | ↔ | BC | 1 Ø | D |

LEGEND:
D = DISK DRIVE
BC = BUS CONNECTOR
UT = USER TERMINAL
BT = BUS TERMINATOR
EM = EXTENSION MEMORY
TD = TAPE DRIVE

*FIG. 2*

CLOCK — CLK P
— CLK N

SELECT NB

CONTROL
LOGIC

REPLY NB

READY NB

REJECT NB

PIN — PRIORITY
LOGIC — PRET

SELECT P — TIME OUT — TIME OUT P
CLK P —

SELECT P

*FIG. 6*

FIG. 3

**FIG. 4**

**FIG. 7**

(a) U/S REGISTER

(b) INVALID

*(c) INVALID

*(d) MEMORY DATA FROM TARGET

(e) INVALID

(f) WRITE DATA FROM SENDING ACCUMULATOR

(g) ADDRESS BITS 0-7

(h) ADDRESS BITS 8-14, 15 IS OFF (ZERO)

(i) INVALID

NOTE: *DENOTES THAT LINE(S) IS DRIVEN
BY TARGET PROCESSOR.

*FIG. 5*

0060535

6 / 7

0060535

**FIG.8**

**FIG.9**

**FIG.11**

**FIG.10**

| ACTION | 1ST TRANSFER | 2ND TRANSFER |
|---|:---:|:---:|
| ● SENDING PROCESSOR IN B/P NO. 1 SLOT 3 INITIATES TRANSFER<br>● PROCESSOR (1-3) USREG = EA<br>    E = PRIMARY TARGET<br>    A = SECONDARY TARGET<br>● PROCESSOR ID = OPERAND = 3X | EA | 3X |
| ● BUS INTERCONNECT (1-E) INITIATES TRANSFER TO B/P NO. 2<br>● DATA TRANSFERED WITHOUT MODIFICATION | EA | 3X |
| ● BUS INTERCONNECT (2-4) RESPONDS BY INITIATING TRANSFER<br>  TO PROCESSOR (2-A)<br>● TARGET ADDRESS EXCHANGED<br>● SECOND TRANSFER MODIFIED TO INSERT OWN UNIT ADDRESS<br>  OF BUS INTERCONNECT | AE | 43 |
| ● TARGET PROCESSOR (2-A) SETS BUSY INTERRUPT AND COPIES<br>SECOND TRANSFER (43) INTO ITS ROUTE REGISTER<br>(IF IT WAS BUSY PRIOR TO THIS — IT WOULD NOT DO STEP 4,<br>INSTEAD — IT WOULD SEND A REJECT STATUS BACK TO THE<br>SENDING PROCESSOR (1-3) | | |

**TABLE 1**